(19) Europäisches Patentamt
European Patent Office
Office européen des brevets

(11) EP 3 932 837 A1

(12) EUROPÄISCHE PATENTANMELDUNG

(43) Veröffentlichungstag:
05.01.2022  Patentblatt 2022/01

(51) Int Cl.:
B65G 43/10 *(2006.01)*   B65G 47/08 *(2006.01)*
B65G 47/31 *(2006.01)*

(21) Anmeldenummer: 20182914.0

(22) Anmeldetag: 29.06.2020

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
KH MA MD TN

(71) Anmelder: Siemens Aktiengesellschaft
80333 München (DE)

(72) Erfinder:
• PRIMS, Domenik
  78315 Radolfzell am Bodensee (DE)
• BARTH, Thomas
  78244 Gottmadingen (DE)

(74) Vertreter: Siemens Patent Attorneys
Postfach 22 16 34
80506 München (DE)

(54) VERFAHREN UND VORRICHTUNG ZUM STRUKTURIEREN EINES STÜCKGUTPULKS

(57) Die Strukturierung eines ungeordneten Pulks (9) von Stückgütern (10), beispielsweise Koffer oder Gepäckstücke, ist relevant für Sortier- und Transportvorgänge. Die Erfindung sieht ein Verfahren und eine Vorrichtung (2) vor. Das Pulk (9) wird auf eine Trennförderstrecke (4) mit hintereinander entlang einer Förderrichtung (8) angeordneten Fördersegmenten (6) aufgebracht, welche individuell in Förderrichtung (8) angetrieben werden mit einer einen zeitlichen Verlauf aufweisenden Geschwindigkeitsfunktion (v(t)). Die Geschwindigkeitsfunktion (v(t)) weist Geschwindigkeitstal und Geschwindigkeitsspitze auf. Die Geschwindigkeitsfunktionen einander nachfolgender Fördersegmente (6) sind in Abhängigkeit von der Fördersegmentlage in Förderrichtung (8) verschoben, so dass durch die abschnittsweise in Förderrichtung (8) ansteigenden Geschwindigkeiten der Fördersegmente (6) Stückgüter (10) beschleunigt werden und innerhalb dem Geschwindigkeitstal ein oder mehrere Stückgüter (10) als Stückgutbündel (11) mit der Nenngeschwindigkeit ($v_0$) des Geschwindigkeitstals transportiert werden. Durch Anpassung der Form der Geschwindigkeitsfunktion (v(t)) kann so auf relativ kurzer Strecke wahlweise eine konstante Lücke oder Teilung einander nachfolgender Stückgutbündel (11) erzielt werden.

FIG 1

**Beschreibung**

Die vorliegende Erfindung betrifft ein Verfahren und eine Vorrichtung zum Strukturieren von einem Pulk von zufällig oder geordnet angeordneten Stückgütern, insbesondere Paketen in Postsortieranlagen und Gepäckstücken in Flughafen-Gepäckförderanlagen, auf einer Trennförderstrecke. Dieser Pulk wird in voneinander längs der Trennförderstrecke ein oder mehrere Stückgüter umfassende Chargen aufgetrennt.

Vor der für eine Sortierung notwendige Identifizierung ist es erforderlich, ungeordnete Stückgüteransammlungen zu einem eindimensionalen Stückgutstrom mit konstanter Lücke bzw. Teilung zu vereinzeln und zu strukturieren. Die Vereinzelung und Strukturierung (Einstellung einer definierten Lücke oder Teilung zwischen Stückgütern) ist ein oft aufwändiger Prozess, es kommen verschiedene Verfahren zum Einsatz. Prinzipiell kann manuell vereinzelt werden, wodurch der Durchsatz allerdings beschränkt ist. Vollautomatisierte Lösungen schaffen mehr Durchsatz, sind allerdings teuer und benötigen viel Platz, da eine Auftrennung meist mit mehreren hintereinander angeordneten, sequenziell beschleunigenden Taktbändern erzielt wird. Wenn zunächst ein dreidimensionales Pulk, beispielsweise nach einer Entladung aus einem ULD, vorliegt, wird ein Entschichten häufig zunächst mit ansteigenden, Nocken aufweisenden Mitnahmeförderbändern durchgeführt. Es existieren Pick-By-Robot Konzepte, die allerdings auf ein zuverlässiges Erkennen und Greifen angewiesen sind und daher aufwendige Detektionssysteme und teure, spezielle Greifroboter benötigen.

Da eine Vereinzelung durch den Einsatz von Gurtfördertechnik häufig nicht schlupffrei umgesetzt werden kann, ist die Zuverlässigkeit der einzustellenden Lücke zwischen einander nachfolgenden Stückgütern durch schwer vorhersehbares Verhalten der Stückgüter an den Übergängen zwischen zwei Taktförderbändern eingeschränkt. Daher muss auch in der Paketlogistik die Fördertechnik häufig in Verbindung mit geeigneten Vision-Systemen umgesetzt werden. Daher kommen für die Strukturierung eines ungeordneten Stückgutpulks meistens viele Fördermodule und Kameras zum Einsatz, weil einerseits unklar ist, wie Stückgüter vor der Vereinzelung zueinander liegen und wie sie sich während der Strukturierung verhalten.

Anforderungen für eine Vereinzelung und Strukturierung innerhalb logistischer Prozesse, ist die Überführung eines Stückgutpulks von einem drei- oder zweidimensionalen Pulk in einen eindimensionalen Stückgutstrom mit definierter Lücke bzw. Teilung.

Der vorliegenden Erfindung liegt daher die Aufgabe zugrunde, eine verbesserte Lösung zu bieten. Diese Aufgabe wird durch die in den unabhängigen Ansprüchen beschriebenen Lösungen gelöst. Vorteilhafte Ausgestaltungen ergeben sich aus den Unteransprüchen.

Die erfindungsgemäße Lösung betrifft ein Verfahren zum Strukturieren eines Stückgutpulks, umfassend die Verfahrensschritte:

a) Bereitstellen einer Trennförderstrecke mit hintereinander entlang der Förderrichtung angeordneten Fördersegmenten zur Auflage der Stückgüter.
b) Aufbringen des Stückgutpulks auf die Trennförderstrecke.
c) Individuelles Antreiben der Fördersegmente in Förderrichtung mit einer einen zeitlichen Verlauf aufweisenden Geschwindigkeitsfunktion. Die Geschwindigkeitsfunktion weist ein Geschwindigkeitstal mit mindestens einer minimalen Nenngeschwindigkeit und eine Geschwindigkeitsspitze auf. Die Geschwindigkeitsfunktionen einander nachfolgender Fördersegmente sind in Abhängigkeit von der Fördersegmentlage in Förderrichtung verschoben, so dass durch die abschnittsweise in Förderrichtung von dem Geschwindigkeitstal bis zur Geschwindigkeitsspitze ansteigenden Geschwindigkeiten der Fördersegmente Stückgüter beschleunigt werden und innerhalb dem Geschwindigkeitstal ein oder mehrere Stückgüter als Stückgutbündel mit der Nenngeschwindigkeit des Geschwindigkeitstals transportiert werden und so eine Strukturierung der Stückgüter am Ende der Trennförderstrecke erzielt wird.

Die Erfindung eignet sich sowohl für inhomogene Stückgutpulke mit Stückgütern wie Paketen, Postsendungen oder Gepäckstücken, als auch für homogene Stückgutpulke mit stets gleichdimensionierten Stückgütern.

Unter einem Strukturieren wird die gezielte Einstellung eines Stückgutabstands (Vorderkante-Vorderkante) und/oder einer Lücke (Hinterkante-Vorderkante) zwischen einander nachfolgender Stückgütern verstanden. Auch ein gezieltes Vereinzeln wird vom Begriff Strukturieren umfasst. Zudem umfasst der Begriff Strukturieren auch ein Entschichten aufeinander aufliegender (und nebeneinander angeordneter) Stückgüter, also ein Überführen eines dreidimensionalen Stückgutpulks bzw. Stückguthaufens in eine ein- oder zweidimensionale Stückgutansammlung. Die Förderrichtung ist im Sinne eines Verlaufs der Förderstrecke zu verstehen, kann daher auch um die Kurve gehen und muss nicht linear sein.

Unter einem Stückgutpulk soll jegliche zufällige oder geordnete ein-, zwei- oder dreidimensionale Ansammlung von Stückgütern, mit und/oder ohne Berührungskontakt zwischen einzelnen Stückgütern, verstanden werden. Ein Stückgutpulk ist somit ein Stückgutstrom. Eine Trennung des Pulks erfolgt entlang der Förderrichtung der Trennförderstrecke. Bei zweidimensionaler Anordnung mehrerer Stückgüter des Pulks quer zur Förderrichtung vor der Trennförderstrecke werden nach Durchführung des Verfahrens am Ende der Trennförderstrecke mehre Stückgüter als Charge nebeneinander angeordnet sein mit einer Lücke zur nachfolgenden Charge. Dreidimensionale Stückgutpulks fallen zusammen entweder durch Mitnahme der unteren Stückgüter durch die Fördersegmente und aufgrund ihrer Trägheit Herabfallen der oberen Stückgüter oder indem die oberen Stückgüter in entstandene Lücken herabrutschen werden.

Die Geschwindigkeitsfunktion bildet in Abhängigkeit von der Zeit ein variabel gestaltbares Höhenprofil ab, eine strenge mathematische Beschreibung ist nicht zwingend erforderlich. Die Geschwindigkeitsfunktion kann empirisch gestützt, also anhand von Erfahrungswerten, wie die Stückgüter eines Stückgutpulks auf die Geschwindigkeitsfunktion reagieren, angepasst werden. Die Fördermittel der Fördersegmente müssen ausgestaltet sein, mit individuell und variabler, von der Geschwindigkeitsfunktion vorgegebener Geschwindigkeit angesteuert zu werden. Besonders eignen sich hierzu Förderstreckensegmente mit Rollen- oder Gurtfördertechnik. Da die Fördersegmente eine Auftrennung bzw. ein Strukturieren des Stückgutpulks bewirken, können sie alternativ auch als Trennsegmente oder Strukturierungssegmente bezeichnet werden.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile wird im Folgenden eingegangen.

Gemäß einer Ausführungsform kann abhängig von der erwünschten Anordnung der Stückgüter am Ende der Trennförderstrecke ein Anpassen einer Länge und/oder Nenngeschwindigkeit des Geschwindigkeitstals und/oder eines Abstands einander nachfolgender Geschwindigkeitstäler erfolgen. Die Länge der Trennförderstrecke hängt von der erwünschten Anordnung ab, allerdings kann bei entsprechender Ansteuerung der Fördermittel der Fördersegmente schon über eine sehr kurze Strecke eine beträchtliche Strukturierung erfolgen. Je länger das als Verschiebungsabschnitt agierende Geschwindigkeitstal, umso grösser die Lücke.

Gemäß einer Ausführungsform kann abhängig von der erwünschten Anordnung der Stückgüter am Ende der Trennförderstrecke ein Anpassen einer Länge und/oder Geschwindigkeit der Geschwindigkeitsspitze und/oder eines Abstands einander nachfolgender Geschwindigkeitsspitzen erfolgen. Die Periodendauer der Geschwindigkeitsfunktion wird über die effektive Stückgutlänge in Förderrichtung geregelt und variiert aufgrund von verschieden langen Stückgütern.

Das Anpassen der Parameter Länge, (Nenn-)Geschwindigkeit, Abstand der Geschwindigkeitsspitzen bzw. -täler umfasst auch die Länge der Beschleunigungs- bzw. Abbremsphasen, deren Form individuell anpassbar ist.

Gemäß einer weiteren Ausführungsform kann ein Detektieren der Ausmaße, insbesondere einer Länge, eines oder mehrerer Stückgüter in Förderrichtung vor und/oder nach dem Aufbringen der Stückgüter auf die Trennförderstrecke und Anpassen der Geschwindigkeitsfunktion in Abhängigkeit von der detektierten Länge des oder der Stückgüter erfolgen.

Gemäß einer weiteren Ausführungsform kann in Förderrichtung zeitlich verschobenes Antreiben der Fördersegmente mit im Wesentlichen derselben Geschwindigkeitsfunktion erfolgen, so dass ein Sampling der Geschwindigkeiten der Fördersegmente entlang der Förderrichtung zu einem festen Zeitpunkt im Wesentlichen die Geschwindigkeitsfunktion ebenso wiedergibt wie eine Geschwindigkeitsmessung eines Fördersegments im zeitlichen Verlauf. Dies bedeutet, dass einander nachfolgende Fördersegmente im Wesentlichen zeitlich verschoben im Wesentlichen identische Geschwindigkeitsprofile aufweisen. Ob eines oder mehrere der einander nachfolgenden Fördersegmente gleichzeitig mit identischer Geschwindigkeit, beispielsweise der Nenngeschwindigkeit des Geschwindigkeitstals, angetrieben werden, hängt ab von der Länge des Geschwindigkeitstals und dem betrachteten Zeitpunkt ab.

Gemäß einer weiteren Ausführungsform kann die Geschwindigkeitsfunktion Abschnitte einer periodischen Funktion, beispielsweise Sinusfunktion, Sägezahn, aufweisen und parametrisierbar sein.

Um sequenzielles Strukturieren zu ermögliche, kann gemäß einer Ausführungsform das Verfahren die Verfahrensschritte aufweisen: Bereitstellen einer weiteren Trennförderstrecke mit hintereinander angeordneten weiteren Fördersegmenten, welche vor oder hinter der ursprünglichen Trennförderstrecke angeordnet ist. Durchführen des oder der Verfahrensschritte nach einem der vorherigen Ansprüche auf der weiteren Trennförderstrecke. Die weitere Trennförderstrecke kann linear oder in einem Winkel angeordnet sein und direkt oder durch ein oder mehrere Förderstrecken getrennt an die ursprüngliche Trennförderstrecke anschließen.

Gemäß einer weiteren Ausführungsform kann das Verfahren zudem die Verfahrensschritte umfassen: Bereitstellen von mindestens einem weiteren vor und/oder nach der Trennförderstrecke angeordneten Fördermodul, wobei die Trennförderstrecke und das Fördermodul bzw. die Fördermodule selber gerade oder in einem Winkel ineinander münden und/oder gerade oder abgeschrägte Enden aufweisen. Einstellen der Fördergeschwindigkeit des Fördermoduls.

Hinsichtlich einer Vorrichtung wird die vorstehend genannte Aufgabe gelöst durch eine Vorrichtung umfassend eine Trennförderstrecke mit hintereinander entlang der Förderrichtung angeordneten Fördersegmenten zur Auflage von Stückgütern eines Stückgutpulks und eine Steuereinheit. Die Fördersegmente weisen jeweils ein mit einer einen zeitlichen Verlauf aufweisenden Geschwindigkeitsfunktion ansteuerbares und antreibbares Fördermittel auf. Die Steuereinheit bestimmt die Geschwindigkeitsfunktion für jedes Fördersegment individuell, wobei die einzelnen Fördersegmente eine von ihrer Lage in Förderrichtung abhängige Geschwindigkeitsfunktion aufweisen. Die Geschwindigkeitsfunktion ist ausgestaltet, eine Strukturierung der Stückgüter (10), insbesondere wahlweise eine definierte Lücke oder eine definierte Teilung der Stückgüter zu erzielen. Typische Fördermittel sind Transportbänder oder -rollen.

Die Vorrichtung weist, soweit übertragbar, die gleichen Vorteile auf, welche bezüglich des vorgestellten Verfahrens aufgeführt sind.

Gemäß einer Ausführungsform kann die Geschwindigkeitsfunktion ein Geschwindigkeitstal mit mindestens einer minimalen Nenngeschwindigkeit und eine Geschwindigkeitsspitze aufweisen und die Steuereinheit kann die Geschwindigkeitsfunktion einander nachfolgender Fördersegmente in Abhängigkeit von der Fördersegmentlage in Förderrichtung verschieben, so dass durch die abschnittsweise in Förderrichtung von dem Geschwindigkeitstal bis zur Geschwindigkeitsspitze ansteigenden Geschwindigkeiten der Fördersegmente Stückgüter beschleunigt werden und innerhalb dem Geschwindigkeitstal ein oder mehrere Stückgüter als Stückgutbündel mit der Nenngeschwindigkeit des Geschwindigkeitstals transportiert werden.

Gemäß einer Ausführungsform kann die Vorrichtung zudem umfassen eine vor oder hinter der ursprünglichen Trennförderstrecke angeordnete weitere Trennförderstrecke mit hintereinander angeordneten weiteren Fördersegmenten. Die weiteren Fördersegmente weisen jeweils ein mit einer weiteren Geschwindigkeitsfunktion ansteuerbares und antreibbares Fördermittel auf, wobei die weitere und die ursprüngliche Geschwindigkeitsfunktion analoge Eigenschaften (insb. hinsichtlich der Anpassungsmöglichkeiten des Geschwindigkeitsprofils) aufweisen. Die Trennförderstrecke und die weitere Trennförderstrecke sind linear oder in einem Winkel zueinander angeordnet. Und die Steuereinheit bestimmt die weitere Geschwindigkeitsfunktion für jedes weitere Fördersegment individuell.

Gemäß einer Ausführungsform kann die Vorrichtung zudem umfassen mindestens ein Detektionsmittel zum Bestimmen der Ausmaße, insbesondere einer Länge in Förderrichtung, eines oder mehrerer Stückgüter auf der Vorrichtung, wobei die Steuereinheit ausgestaltet ist, die Geschwindigkeitsfunktion der einzelnen Fördersegmente in Antwort auf die detektierten Ausmaße anzusteuern. Als Detektionsmittel kann beispielsweise eine Kamera verwendet werden, je nachdem ist bereits eine einfache Lichtschranke, vorteilhafterweise vor, am Beginn oder am Übergang zur Trennförderstrecke angeordnet, ausreichend.

Gemäß einer Ausführungsform kann die Steuereinheit ausgestaltet sein, die Geschwindigkeitsfunktionen der Fördersegmente, insbesondere Länge und/oder Nenngeschwindigkeit der Geschwindigkeitstäler und/oder Maximalgeschwindigkeit und/oder einen Abstand einander nachfolgender Geschwindigkeitsspitzen, abhängig von der tatsächlichen und/oder erwünschten Anordnung der Stückgüter am Anfang und/oder Ende der Trennförderstrecke anzupassen.

Gemäß einer Ausführungsform kann die Vorrichtung zudem umfassen ein oder mehrere vor und/oder nach der Trennförderstrecke und/oder der weiteren Trennförderstrecke angeordnete Fördermodule mit individuell ansteuerbarer und einstellbarer Fördergeschwindigkeit, wobei das oder die Fördermodule gerade und/oder abgeschrägte Enden aufweisen und die Trennförderstrecke und das Fördermodul oder die Fördermodule selber gerade oder in einem Winkel ineinander münden.

Gemäß einer Ausführungsform kann die Steuereinheit ausgestaltet sein, die Fördersegmente in Förderrichtung zeitlich verschoben mit im Wesentlichen derselben Geschwindigkeitsfunktion anzutreiben, so dass ein Sampling der Geschwindigkeiten der Fördersegmente entlang der Förderrichtung zu einem festen Zeitpunkt im Wesentlichen die Geschwindigkeitsfunktion ebenso wiedergibt wie eine Geschwindigkeitsmessung eines Fördersegments im zeitlichen Verlauf.

Ausführungsformen der Erfindung werden nachfolgend anhand der Figuren beispielsweise näher erläutert. Dabei zeigen:

Figur 1    ein Fördermodul und eine Trennförderstrecke;

Figur 2    Geschwindigkeitsfunktionen;

Figur 3    eine Trennförderstrecke mit vorgeschalteten Taktbändern;

Figur 4    eine Trennförderstrecke mit mehreren nachgeschalteten, linear und gewinkelt angeordneten Fördermodulen mit geraden und/oder abgeschrägten Enden; und

Figur 5    eine Trennförderstrecke mit zwei nachgeschalteten Fördermodulen zunächst linear und dann quer zueinander angeordnet.

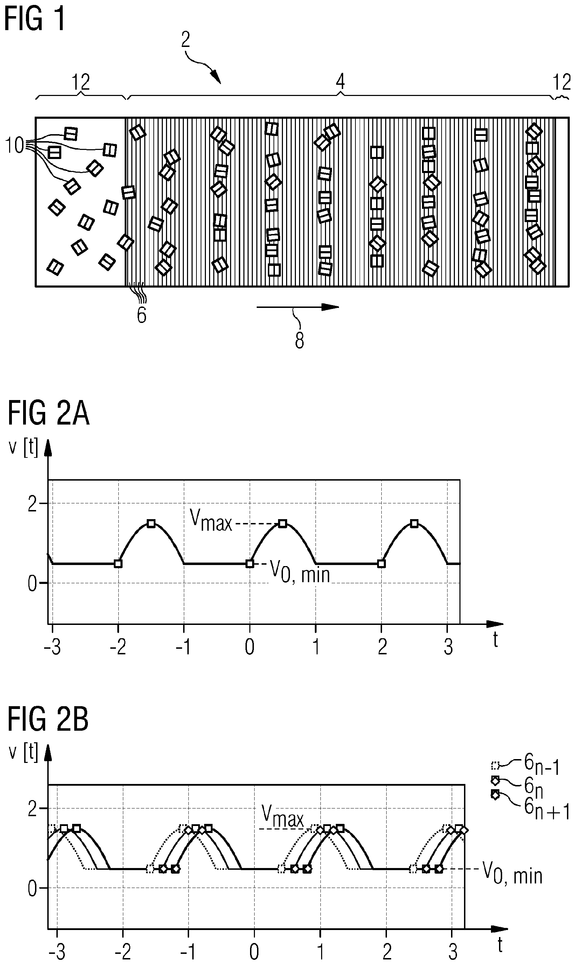

Die erfindungsgemäße Lösung sieht eine systematische Kombination von klassischer Fördertechnik (Transportbänder, Transportrollen) mit einer Fördersegmente 6 umfassende Fördertechnik bzw. Trennförderstrecke 4 (Gurt- oder Rollenfördertechnik) vor, um ein ungeordnetes Pulk 9 an Stückgütern 10 in einen geordneten Stückgutstrom 11 mit wahlweise konstanter Stückgutteilung oder Stückgutlücke umzuwandeln. Unter einem Stückgutpulk 9 ist jede vor der Trennförderstrecke 4 befindliche, meist ungeordnete, Anordnung an Stückgütern 10 zu verstehen, wobei auf der Trennförderstrecke 4 und zusätzlich auf nachgeschalteten Fördermodulen 12 und/oder nachgeschalteten weiteren Trennförderstrecken 4' eine Veränderung der Anordnung dieser Stückgüter 10 zueinander erfolgt. So kann das Stückgutpulk 9 ein dreidimensionaler Haufen oder eine zweidimensionale Anordnung wie in Figur 1 sein. Bei bereits linear hintereinander angeordneten Stückgütern 10 können durch Anpassung der Geschwindigkeitsfunktion v(t) der Fördersegmente 6 auf der Trennförderstrecke 4 wahlweise die Stückgutteilung oder die Stückgutlücke verändert werden, ansonsten wird die Teilung bzw. die Lücke zwischen ein oder mehreren Stückgütern 10 umfassenden Bündeln 11 geregelt. Jedem Fördersegment 6 wird in Abhängigkeit von der Segment-Lage in Förderrichtung 8 eine parametrisierbare periodische Geschwindigkeitsfunktion aufgeprägt.

Figur 1 zeigt linear in Förderrichtung 8 hintereinander angeordnet eine erfindungsgemäße Vorrichtung 2 umfassend ein Fördermodul 12 und eine Trennförderstrecke 4, die wiederum in eine weitere Förderstreck 12' mündet. Auf dem Förderband 12 liegt ein ungeordnetes Stückgutpulks 9 auf, welches an das erste und anschließend die nachfolgenden Fördersegmente 6 der nachfolgenden Trennförderstrecke 4 übergeben wird. Die Vorrichtung 2 umfasst eine Steuereinheit zur Ansteuerung der Fördermittel der Fördersegmente 6 und der Förderbänder 12. Die Steuereinheit ist ausgestaltet, in Abhängigkeit von der tatsächlichen Anordnung des Pulks 9 am Anfang und von der erwünschten Anordnung der Stückgutbündel 11 zueinander am Ende der Vorrichtung 2 bzw. von der erwünschten Teilung bzw. Lücke eines eindimensionalen Stückgutstroms, die Geschwindigkeitsfunktion $v(t)$ aller Fördersegmente 6 und die Geschwindigkeiten aller Fördermodule 12 anzupassen.

Die Fördersegmente 6 werden jeweils individuell mit einer zeitlich variablen Geschwindigkeitsfunktion $v(t)$ angetrieben. Die den Fördersegmenten 4 aufgeprägte Geschwindigkeitsfunktion $v(t)$ ist abschnittsweise periodisch (Sinus, Sägezahn etc.), wobei die Parameter, welche die Form der Geschwindigkeitsfunktion $v(t)$ bestimmen, angepasst werden können abhängig davon, ob eine konstante Lücke oder eine konstante Teilung eingestellt werden soll. Solange Stückgüter 10 auf den Fördersegmenten 6 aufliegen, fällt die Geschwindigkeit $v$ zu keinem Zeitpunkt $t$ unter eine Nenngeschwindigkeit $v_0$ und zu keinem Zeitpunkt $t$ wird eine Maximalgeschwindigkeit $v_{max}$ überschritten. Durch die abschnittsweise in Förderrichtung 8 ansteigende Geschwindigkeit $v$ werden die Stückgüter 10 beschleunigt bis zu einem Geschwindigkeitstal und innerhalb diesem Geschwindigkeitstal werden die Stückgüter 10 als Gruppe 11 gebündelt mit der Nenngeschwindigkeit $v_0$ transportiert. Die Länge und die Nenngeschwindigkeit $v_0$ des Geschwindigkeitstals bestimmt die Länge des Stückgutbündels 11 in Förderrichtung 8. Um eine definierte Teilung zu erzielen, wird die Länge des Geschwindigkeitstals angepasst auf die effektive Länge der Stückgüter 10 in Förderrichtung 8 bzw. auf die gewünschte Anzahl der in einem Stückgutbündel 11 in Förderrichtung 8 hintereinander angeordneten Stückgüter 10, also auf die effektive Länge des Stückgutbündels.

Figur 2a zeigt exemplarisch eine Ausführung der Geschwindigkeitsfunktion $v_p(t)$ eines Fördersegments 6 für eine Sinusfunktion und die Einstellung einer konstanten Stückgutteilung mit nachfolgender Berechnungsvorschrift:

$$v_p(t) = (v_{max} - v_0) * \sin\left(\frac{\pi * v_0 * t}{c_s} - \frac{\Delta * \pi * v_0}{v_0 * c_s}\right) + v_0 \quad \text{mit} \quad v_p(t) = \begin{cases} v(t) & f\ddot{u}r\ v(t) \geq v_0 \\ v_0 & f\ddot{u}r\ v(t) < v_0 \end{cases}$$

Hierbei ist $t$ die Zeit [s], $c_s$ ein Verschiebungsparameter [m] und $\Delta$ eine Segmentverschiebung in Förderrichtung 8 relativ zum ersten Fördersegment $6_1$ [m]. Die Geschwindigkeitsfunktion $v_p(t)$ ist hier eine Sinusfunktion $v(t)$, die immer dann abgeschnitten ist, wenn ihre Geschwindigkeit unterhalb der Nenngeschwindigkeit $v_0$ liegen würde.

Figur 2b zeigt einen Geschwindigkeitsverlauf von drei hintereinander entlang der Förderrichtung 8 angeordneten Fördersegmenten $6_{n-1}$, $6_n$, $6_{n+1}$. Die Fördersegmente $6_{n-1}$, $6_n$, $6_{n+1}$ weisen denselben Geschwindigkeitsverlauf auf, allerdings ist die Geschwindigkeitsfunktion $v(t)$ in Abhängigkeit von der Segmentlage in Förderrichtung 8 nach rechts verschoben. So gibt ein Sampling der Geschwindigkeiten $v$ aller Fördersegmente 6 entlang der Förderrichtung 8 zu einem festen Zeitpunkt $t_1$ im Wesentlichen die Geschwindigkeitsfunktion $v(t)$ ebenso wieder wie eine Geschwindigkeitsmessung eines Fördersegments 6 im zeitlichen Verlauf. Im Wesentlichen, weil leichte Abweichungen der Geschwindigkeitsfunktionen $v(t)$ einzelner Fördersegmente 6, beispielsweise durch eine dynamische Anpassung der Parameter der o.g. Berechnungsvorschrift oder durch leichte Ungenauigkeiten der Antriebe, das Funktionsprinzip des Strukturierens nicht stören.

Über eine Regelung des Verschiebungsparameters $c_s$ kann die Länge der einzelnen Stückgutbündel 11 in Förderrichtung 8 geregelt werden, so dass in einem Stückgutbündel 11 entweder eine bestimmte Anzahl von Stückgütern 10 gruppiert werden soll oder wenn die Länge des Stückgutbündels 11 den Stückgutabmessungen, insbesondere einer effektiven Stückgutlänge in Förderrichtung 8, angepasst werden soll. Bei einem sehr heterogenen Stückgut-Spektrum kann aus dem Verschiebungsparameter $c_s$ auch ein Regelparameter werden, der in Abhängigkeit von den Stückgutabmessungen und der gewünschten Bündellänge dynamisch bestimmt wird. Durch eine dynamische Anpassung des Verschiebungsparameters $c_s$ erhält die Geschwindigkeitsfunktion $v(t)$ einen nicht-periodischen Verlauf.

Ein Trenneffekt tritt auch auf, wenn das Fördermittel (z.B. eine Transportrolle oder ein Transportband) des Fördersegments 6 im Geschwindigkeitstal nicht exakt konstant mit der Nenngeschwindigkeit $v_0$ angetrieben wird, sondern nur im Wesentlichen mit einer Nenngeschwindigkeit $v_0'$, die im zeitlichen Verlauf leicht von der Nenngeschwindigkeit $v_0$ abweichen kann. Auch kann sich die Nenngeschwindigkeit $v_0$ einzelner Geschwindigkeitstäler und/oder die maximale Geschwindigkeit $v_{max}$ unterschiedlicher Geschwindigkeitsspitzen unterscheiden. Somit stellen dann auch die Nenngeschwindigkeit $v_0$ und die Spitzengeschwindigkeiten einstellbare Parameter der Geschwindigkeitsfunktion $v(t)$ dar.

Eine konstante Stückgutlücke kann beispielsweise mit der nachfolgenden Geschwindigkeitsfunktion eingestellt werden:

$$v_p(t) = (v_{max} - v_0) * \sin\left(\frac{\pi * v_0 * t}{c_s}\right) + v_0 \quad \text{mit} \quad v_p(t) = \begin{cases} v(t) & \text{für } t = t_0 \dots t_0 + \frac{c_s}{v_0} \\ v_0 & \text{für } t = (t_0 + \frac{c_s}{v_0}) \dots (t_0 + \frac{c_s + L_s}{v_0}) \end{cases}$$

Hierbei ist $t_0$ der Startzeitpunkt der Gappingphase des aktuell auf dem betreffenden Fördersegment $6_n$ aufliegenden Stückguts 10 und $L_s$ ist die effektive Länge des Stückguts 10, also die Stückgutdimension entlang der Förderrichtung 8.

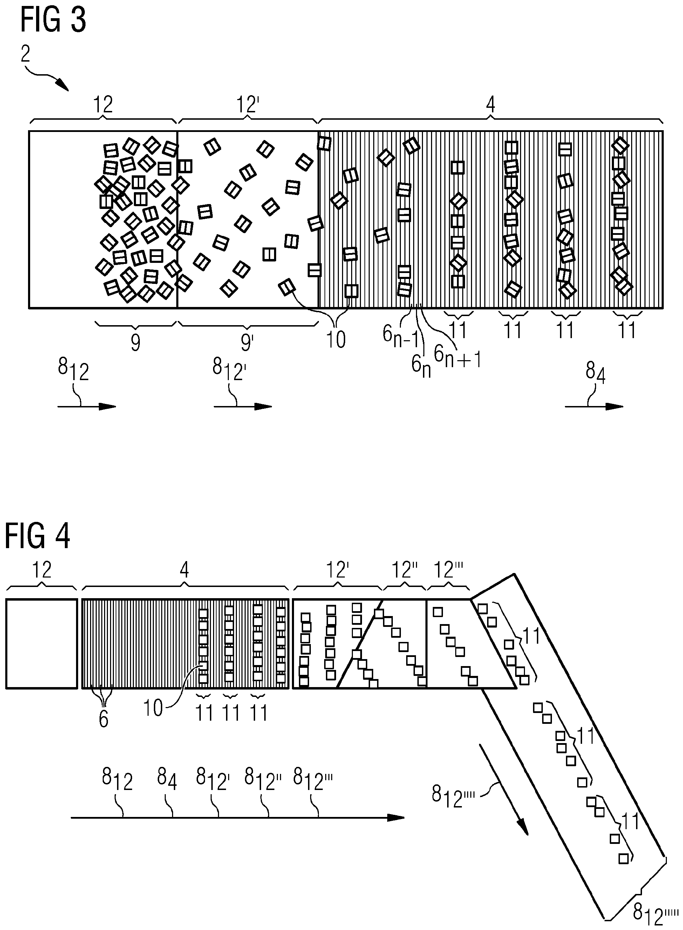

Über die Regelung des Verschiebungsparameters $c_s$ kann die Lücke bzw. Teilung zwischen den einzelnen Stückgütern 10 in Förderrichtung 6 geregelt werden. Dadurch kann die Teilung den Stückgutabmessungen angepasst werden. Wenn eine konstante Lücke zwischen den Stückgütern 10 eines Stückgutbündels 11 eingestellt werden soll, ist der Verschiebungsparameters $c_s$ konstant. Bei einem sehr heterogenen Stückgutspektrum kann aus dem Verschiebungsparameter $c_s$ auch ein Regelparameter werden, der dynamisch in Abhängigkeit von den Stückgutabmessungen angepasst wird, wodurch die Geschwindigkeitsfunktion eine nicht-periodischen Verlauf erhält. Die Periodendauer der Geschwindigkeitsfunktion $v_p(t)$ wird über die Stückgutlänge $L_s$ geregelt und variiert aufgrund von verschieden langen Stückgütern 10. Die Anpassung der Periodendauer regelt die Teilung (Pitch). Die individuelle Stückgut-Größe kann bspw. mit einem Vision-System erfasst werden oder bei einem bereits leicht entzerrten Stückgutbündel 9' (Figur 3) einfach mit einer am Übergang zwischen Fördermodul 12' und Trennförderstrecke 4 angeordneten Lichtschranke.

Um eine konstante Teilung (pitch) zu erzielen muss die Periodendauer bzw. die Abstände der Geschwindigkeitsspitzen konstant bleiben. Die Periodendauer variiert bei unterschiedlichen Stückgutlängen, wenn eine konstante Stückgutlücke (Gap) erzielt werden soll. Die Länge des Geschwindigkeitstals bzw. der Verschiebungsparameters $c_s$ bestimmt bei konstanter Stückgutlänge die Länge der Stückgutlücke.

Die beiden Berechnungsvorschriften für Geschwindigkeitsfunktionen v(t) sind nur exemplarisch anzusehen. Die Geschwindigkeitsfunktion v(t) kann viele Formen annehmen, solange sie eine abschnittsweise Beschleunigung bis hin zu Geschwindigkeitsspitzen und Geschwindigkeitstäler mit einer minimalen Nenngeschwindigkeit $v_0$ aufweisen. Die Geschwindigkeitsfunktion v(t) kann sich von Geschwindigkeitsspitze zu Geschwindigkeitsspitze unterscheiden, allerdings sind einfach parametrisierbare Funktionen für ein gezieltes Strukturieren zu bevorzugen. Die Höhe der Geschwindigkeitsspitzen der Geschwindigkeitsspitzen bzw. die Nenngeschwindigkeiten $v_0$ der Geschwindigkeitstäler muss nicht übereinstimmen. Besonders als Geschwindigkeitsfunktionen v(t) eignen sich Funktionen mit sanften Geschwindigkeitsänderungen, da durch harte und abrupte Geschwindigkeitsänderungen leichter unkontrollierbarer Schlupf der Stückgüter entsteht als bei sanften Geschwindigkeitsänderungen, bei denen quasi alle Stückgüter 10 im Wesentlichen gleich auf Geschwindigkeitsänderungen ansprechen und wenige unkontrollierte Stückgutbewegungen (Schlupf, Rutschen, ...) auftreten. Die Länge des Geschwindigkeitstals muss groß genug sein, damit die Nenngeschwindigkeit $v_0$ auf das längste Stückgut des Systems übertragen werden kann. Da das Geschwindigkeitstal eine minimale Nenngeschwindigkeit $v_0$ und eine gewisse Längte aufweist, kann es auch als Hochplateau angesehen werden. Leichte Variationen der Geschwindigkeit des Geschwindigkeitstals führen ebenfalls zu einer Verschiebung.

Figur 3 zeigt ein Auseinanderziehen eines zunächst auf einem Förderband 12 aufliegenden, ungeordneten Stückgutpulks 9 gemäß einer Ausführungsform der Erfindung. Das in Förderrichtung $8_{12,12',4}$ hinter dem ersten Förderband 12 angeordnete weitere Förderband 12' wird schneller als das erste Förderband 12 angetrieben, so dass die Stückgüter 9, hier exemplarisch Pakete einer Postsortieranlage, beim Förderband-Übergang einen Geschwindigkeitssprung erfahren, so beschleunigt und auseinandergezogen und als Ergebnis entzerrt werden. Die Förderbänder 12, 12' sind hintereinander geschaltete Taktbänder 12, 12'. Auf dem weiteren Förderband 12' ist das Stückgutpulk 9' zwar entzerrt, aber immer noch ungeordnet. Dieser erste Entzerrungsschritt beschleunigt das Strukturieren auf der Trennförderstrecke 4.

Figur 4 zeigt eine erfindungsgemäße Anordnung von Fördermodulen 12'-12'''' mit jeweils einem geraden und einem schrägen Anschluss zur Trennförderstrecke 4. Die Fördermodule 12'-12'''' können Streifenbänder, die Fördersegmente 6 Rollenfördertechnik aufweisen. Am Ende der Trennförderstrecke 4 liegen die Pakete 10 als Bündel 11 mit mehreren Paketen 10 quer zur Förderrichtung $8_4$ vor. Auf der Trennförderstrecke 4 werden die Transportrollen der einzelnen Fördersegmente 6 individuell mit periodischer Geschwindigkeitsfunktion angetrieben, um einen Pulk 9 von Paketen 10 in Förderrichtung 8 auseinanderzuziehen. Eine Entzerrung quer zur Förderrichtung 8 und somit eine tatsächliche Vereinzelung hat noch nicht stattgefunden. Hinter der Trennförderstrecke sind jeweils zwei Fördermodule 12',12'' mit jeweils einem geraden und einem schrägen Anschluss (bspw. Streifenband) angeordnet, um die einzelnen Bündel 11 in Förderrichtung 8 auseinanderzuziehen und über ein drittes Dreiecksband 12''' auf dem finalen Fördermodul 12'''' als 1D-Strom abzuziehen. Das hinter der Trennförderstrecke 4 angeordnete Fördermodul 12' weist ein abgeschrägtes Ende auf und mündet linear in ein weiteres Fördermodul 12 '' mit einem auf das abgeschrägte Ende angepassten abgeschrägten Anfang. Der Winkel der Abschrägung hängt vom Förderstreckenlayout ab, also in welchem Winkel zur bisherigen Transportrichtung 8 die finale Abförderrichtung $8_{12''}$ angeordnet ist. Um ein Überführen in einen eindimensionalen Stückgutstrom zu erzielen, muss das erste Fördermodul 12' nach der Trennförderstrecke 4 mit langsamerer Fördergeschwindigkeit angetrieben werden als das nachfolgende Fördermodul 12", der Geschwindigkeitssprung muss jedoch nicht groß sein.

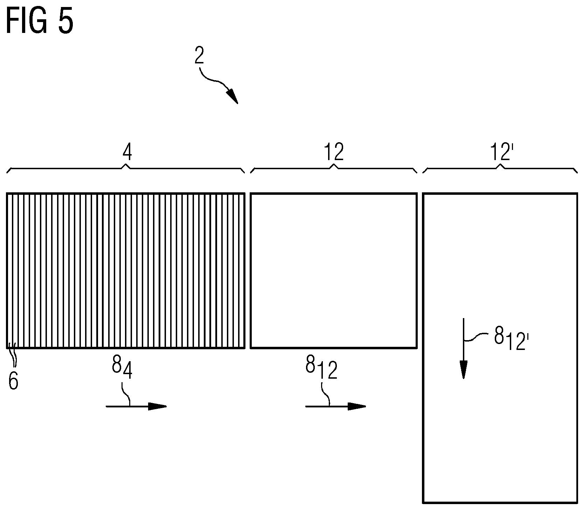

In Figur 4 wird der Stückgutstrom abgewinkelt abtransportiert, in Figur 5 wird der Stückgutstrom orthogonal abgezogen. Die Fördermodule 12, 12' sind orthogonal zueinander und ineinander mündend angeordnet. Ein orthogonales Abziehen erfordert keine mehrfachen, abgewinkelten Fördermodule 12. Durch eine gezielte Ansteuerung der Trennförderstrecke 4 und der nachfolgenden Fördermodule 12 wird ein ungeordnetes Pulk 9 in einen eindimensionalen Stückgutstrom mit gewünschter Lücke bzw. Teilung eingestellt.

Gemäß einer weiteren Ausführungsform wird ein dreidimensionales Pulk 9 mit der erfindungsgemäßen Vorrichtung 2 auf der Trennförderstrecke 4 strukturiert. Durch das Aufprägen eines zeitlich variablen Geschwindigkeitsprofils v(t) mit Geschwindigkeitstälern, welche im Wesentlichen mit Nenngeschwindigkeit $v_0$ angetrieben werden und mit Geschwindigkeitsspitzen, wobei die Geschwindigkeitsprofile v(t) der einzelnen Fördersegmente 6 in Abhängigkeit von der Lage der Fördersegmente 6 in Förderrichtung 8 verschoben sind, werden auch in einem dreidimensionalen Pulk 9 Lücken erzeugt. Durch das abschnittsweise Beschleunigen rutschen die oberen von den unteren Stückgütern 10 ab und füllen die erzeugten Lücken. So baut sich automatisch die Pulkhöhe ab bis zur vollständigen Ausprägung einer zweidimensionalen Stückgutschicht 9. Durch das Hineinrutschen der oberen Stückgüter 10 in die Lücken erfordert ein dreidimensionales Pulk 9 eine längere Trennförderstrecke 4 als ein zweidimensionales Pulk 9 und/oder mehrere hintereinander angeordnete Trennförderstrecken 4,4'.

**Bezugszeichenliste**

| | |
|---|---|
| 2 | Vorrichtung |
| 4 | Trennförderstrecke |
| 6 | Fördersegmente |
| 8 | Förderrichtung |
| 9 | (Stückgut-)Pulk |
| 10 | Stückgut |
| 11 | (Stückgut-)Bündel |
| 12 | Fördermodul |
| v(t) | Geschwindigkeitsfunktion |
| $v_0$ | Nenngeschwindigkeit |

**Patentansprüche**

1. Verfahren zum Strukturieren eines Stückgutpulks (9), umfassend die Verfahrensschritte

    a) Bereitstellen einer Trennförderstrecke (4) mit hintereinander entlang der Förderrichtung (8) angeordneten Fördersegmenten (6) zur Auflage der Stückgüter (10);
    b) Aufbringen des Stückgutpulks (9) auf die Trennförderstrecke (4) ;
    c) individuelles Antreiben der Fördersegmente (6) in Förderrichtung (8) mit einer einen zeitlichen Verlauf aufweisenden Geschwindigkeitsfunktion, wobei

        - die Geschwindigkeitsfunktion ein Geschwindigkeitstal mit mindestens einer minimalen Nenngeschwindigkeit $v_{0,min}$ und eine Geschwindigkeitsspitze aufweist; und
        - die Geschwindigkeitsfunktionen einander nachfolgender Fördersegmente (6) in Abhängigkeit von der Fördersegmentlage in Förderrichtung (8) verschoben sind, so dass durch die abschnittsweise in Förderrichtung (8) von dem Geschwindigkeitstal bis zur Geschwindigkeitsspitze ansteigenden Geschwindigkeiten der Fördersegmente (6) Stückgüter (10) beschleunigt werden und innerhalb dem Geschwindigkeitstal ein oder mehrere Stückgüter (10) als Stückgutbündel (11) mit der Nenngeschwindigkeit des Geschwindigkeitstals transportiert werden und so eine Strukturierung der Stückgüter (10) am Ende der Trennförderstrecke (4) erzielt wird.

2. Verfahren nach Anspruch 1, **gekennzeichnet durch** abhängig von der erwünschten Anordnung der Stückgüter (10) am Ende der Trennförderstrecke (4) Anpassen einer Länge und/oder Nenngeschwindigkeit des Geschwindigkeitstals und/oder eines Abstands einander nachfolgender Geschwindigkeitstäler.

3. Verfahren nach einem der vorherigen Ansprüche, zudem umfassend den Verfahrensschritt
abhängig von der erwünschten Anordnung der Stückgüter (10) am Ende der Trennförderstrecke (4) Anpassen einer Länge und/oder Geschwindigkeit der Geschwindigkeitsspitze und/oder eines Abstands einander nachfolgender Geschwindigkeitsspitzen.

4. Verfahren nach einem der vorherigen Ansprüche, zudem umfassend den Verfahrensschritt
Detektieren der Ausmaße, insbesondere einer Länge, eines oder mehrerer Stückgüter (10) in Förderrichtung (8) vor und/oder nach dem Aufbringen der Stückgüter (10) auf die Trennförderstrecke (4) und Anpassen der Geschwindigkeitsfunktion in Abhängigkeit von der detektierten Länge des oder der Stückgüter (10).

5. Verfahren nach einem der vorherigen Ansprüche, **gekennzeichnet durch**
in Förderrichtung (8) zeitlich verschobenes Antreiben der Fördersegmente (6) mit im Wesentlichen derselben Geschwindigkeitsfunktion, so dass ein Sampling der Geschwindigkeiten der Fördersegmente (6) entlang der Förderrichtung (8) zu einem festen Zeitpunkt im Wesentlichen die Geschwindigkeitsfunktion ebenso wiedergibt wie eine Geschwindigkeitsmessung eines Fördersegments (6) im zeitlichen Verlauf.

6. Verfahren nach einem der vorherigen Ansprüche, **dadurch gekennzeichnet, dass**
die Geschwindigkeitsfunktion Abschnitte einer periodischen Funktion, beispielsweise Sinusfunktion, Sägezahn, aufweist und parametrisierbar ist.

7. Verfahren nach einem der vorherigen Ansprüche, zudem umfassend die Verfahrensschritte

a) Bereitstellen einer weiteren Trennförderstrecke (4) mit hintereinander angeordneten weiteren Fördersegmenten (6), welche vor oder hinter der ursprünglichen Trennförderstrecke (4) angeordnet ist;
b) Durchführen des oder der Verfahrensschritte nach einem der vorherigen Ansprüche auf der weiteren Trennförderstrecke (4).

8. Verfahren nach einem der vorherigen Ansprüche, zudem umfassend den Verfahrensschritt

a) Bereitstellen von mindestens einem weiteren vor und/oder nach der Trennförderstrecke (4) angeordneten Fördermodul (12), wobei die Trennförderstrecke (4) und das Fördermodul (12) bzw. die Fördermodule (12) selber gerade oder in einem Winkel ineinander münden und/oder gerade oder abgeschrägte Enden aufweisen;
b) Einstellen der Fördergeschwindigkeit des Fördermoduls (12) (12) .

9. Vorrichtung (2) umfassend eine Trennförderstrecke (4) mit hintereinander entlang der Förderrichtung (8) angeordneten Fördersegmenten (6) zur Auflage von Stückgütern (10) eines Stückgutpulks (9) und eine Steuereinheit, wobei

a) die Fördersegmente (6) jeweils ein mit einer einen zeitlichen Verlauf aufweisenden Geschwindigkeitsfunktion (v(t)) ansteuerbares und antreibbares Fördermittel aufweisen;
b) die Steuereinheit die Geschwindigkeitsfunktion (v(t)) für jedes Fördersegment (6) individuell bestimmt, wobei die einzelnen Fördersegmente (6) eine von ihrer Lage in Förderrichtung (8) abhängige Geschwindigkeitsfunktion (v(t)) aufweisen;
c) die Geschwindigkeitsfunktion (v(t)) ausgestaltet ist, eine Strukturierung der Stückgüter (10), insbesondere wahlweise eine definierte Lücke oder eine definierte Teilung der Stückgüter (10), zu erzielen.

10. Vorrichtung (2) nach Anspruch 9, **dadurch gekennzeichnet, dass**
die Geschwindigkeitsfunktion (v(t)) ein Geschwindigkeitstal mit mindestens einer minimalen Nenngeschwindigkeit ($v_{0,min}$) und eine Geschwindigkeitsspitze aufweist und die Steuereinheit die Geschwindigkeitsfunktion (v(t)) einander nachfolgender Fördersegmente (6) in Abhängigkeit von der Fördersegmentlage in Förderrichtung (8) verschiebt, so dass durch die abschnittsweise in Förderrichtung (8) von dem Geschwindigkeitstal bis zur Geschwindigkeitsspitze ansteigenden Geschwindigkeiten der Fördersegmente (6) Stückgüter (10) beschleunigt werden und innerhalb dem Geschwindigkeitstal ein oder mehrere Stückgüter (10) als Stückgutbündel (11) mit der Nenngeschwindigkeit ($v_0$) des Geschwindigkeitstals transportiert werden.

11. Vorrichtung (2) nach einem der Ansprüche 9 bis 10, zudem umfassend

a) eine vor oder hinter der ursprünglichen Trennförderstrecke (4) angeordnete weitere Trennförderstrecke (4') mit hintereinander angeordneten weiteren Fördersegmenten (6'), wobei

b) die weiteren Fördersegmente (6') jeweils ein mit einer weiteren Geschwindigkeitsfunktion (v(t)) ansteuerbares und antreibbares Fördermittel aufweisen, wobei die weitere und die ursprüngliche Geschwindigkeitsfunktion (v(t)) analoge Eigenschaften aufweisen;

c) die Trennförderstrecke (4) und die weitere Trennförderstrecke (4') linear oder in einem Winkel zueinander angeordnet sind; und

d) die Steuereinheit die weitere Geschwindigkeitsfunktion (v(t)) für jedes weitere Fördersegment (6') individuell bestimmt.

**12.** Vorrichtung (2) nach einem der Ansprüche 9 bis 11, zudem umfassend
mindestens ein Detektionsmittel zum Bestimmen der Ausmaße, insbesondere einer Länge in Förderrichtung (8), eines oder mehrerer Stückgüter (10) auf der Vorrichtung (2), wobei die Steuereinheit ausgestaltet ist, die Geschwindigkeitsfunktion (v(t)) der einzelnen Fördersegmente (6) in Antwort auf die detektierten Ausmaße anzusteuern.

**13.** Vorrichtung (2) nach einem der Ansprüche 9 bis 12, **dadurch gekennzeichnet, dass**
die Steuereinheit ausgestaltet ist, die Geschwindigkeitsfunktionen (v(t)) der Fördersegmente (6), insbesondere Länge und/oder Nenngeschwindigkeit ($v_0$) der Geschwindigkeitstäler und/oder Maximalgeschwindigkeit und/oder einen Abstand einander nachfolgender Geschwindigkeitsspitzen, abhängig von der tatsächlichen und/oder erwünschten Anordnung der Stückgüter (10) am Anfang und/oder Ende der Trennförderstrecke (4) anzupassen.

**14.** Vorrichtung (2) nach einem der Ansprüche 9 bis 13, zudem umfassend
ein oder mehrere vor und/oder nach der Trennförderstrecke (4) angeordnete Fördermodule (12) mit individuell ansteuerbarer und einstellbarer Fördergeschwindigkeit, wobei das oder die Fördermodul (12) gerade und/oder abgeschrägte Enden aufweisen und die Trennförderstrecke (4) und das Fördermodul (12) oder die Fördermodule (12) selber gerade oder in einem Winkel ineinander münden

**15.** Vorrichtung (2) nach einem der Ansprüche 9 bis 14, **dadurch gekennzeichnet, dass**
die Steuereinheit ausgestaltet ist, die Fördersegmente (6) in Förderrichtung (8) zeitlich verschoben mit im Wesentlichen derselben Geschwindigkeitsfunktion (v(t)) anzutreiben, so dass ein Sampling der Geschwindigkeiten der Fördersegmente (6) entlang der Förderrichtung (8) zu einem festen Zeitpunkt im Wesentlichen die Geschwindigkeitsfunktion (v(t)) ebenso wiedergibt wie eine Geschwindigkeitsmessung eines Fördersegments (6) im zeitlichen Verlauf.

FIG 1

FIG 2A

FIG 2B

## FIG 3

## FIG 4

# FIG 5

2

4　　　　　　　　　　　12　　　　　　　　12'

6

$8_4$

$8_{12}$

$8_{12'}$

**Europäisches Patentamt**
**European Patent Office**
**Office européen des brevets**

# EUROPÄISCHER RECHERCHENBERICHT

Nummer der Anmeldung

EP 20 18 2914

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 193 659 A (MARSHALL ADRIAN R [GB]) 16. März 1993 (1993-03-16) * Spalte 2, Zeile 50 - Spalte 5, Zeile 18 * * Abbildungen 1-3 * ----- | 1-15 | INV. B65G43/10 B65G47/08 B65G47/31 |
| X | JP 2008 214080 A (FUJI MACHINERY CO) 18. September 2008 (2008-09-18) * Absätze [0022], [0027] * * Anspruch 1 * * Abbildungen 4,5,6b * ----- | 1-15 | |
| X | DE 10 2010 006736 A1 (STIEFFENHOFER REINER [DE]) 4. August 2011 (2011-08-04) * Absatz [0034] * * Abbildungen 1-5 * ----- | 1-15 | |
| X | US 2003/141165 A1 (REZNIK DAN [US] ET AL) 31. Juli 2003 (2003-07-31) * Absätze [0026] - [0029], [0051] * * Abbildungen 1-12 * ----- | 9,11-14 | RECHERCHIERTE SACHGEBIETE (IPC) |
| X | WO 2004/039706 A1 (RAPISTAN SYS ADVERTISING CORP [US]) 13. Mai 2004 (2004-05-13) * Seite 5, Absatz 3 - Seite 9, Absatz 1 * * Abbildungen 1-11 * ----- | 9,11-14 | B65G |

Der vorliegende Recherchenbericht wurde für alle Patentansprüche erstellt

| Recherchenort | Abschlußdatum der Recherche | Prüfer |
|---|---|---|
| Den Haag | 2. Dezember 2020 | Thenert, Alexander |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 20 18 2914

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-12-2020

| Im Recherchenbericht angeführtes Patentdokument | Datum der Veröffentlichung | Mitglied(er) der Patentfamilie | Datum der Veröffentlichung |
|---|---|---|---|
| US 5193659 A | 16-03-1993 | AT 112750 T <br> DE 69013356 T2 <br> EP 0504237 A1 <br> JP H05505587 A <br> US 5193659 A <br> WO 9108971 A1 | 15-10-1994 <br> 18-05-1995 <br> 23-09-1992 <br> 19-08-1993 <br> 16-03-1993 <br> 27-06-1991 |
| JP 2008214080 A | 18-09-2008 | JP 4823106 B2 <br> JP 2008214080 A | 24-11-2011 <br> 18-09-2008 |
| DE 102010006736 A1 | 04-08-2011 | KEINE | |
| US 2003141165 A1 | 31-07-2003 | US 2003141165 A1 <br> WO 03064301 A2 | 31-07-2003 <br> 07-08-2003 |
| WO 2004039706 A1 | 13-05-2004 | AU 2003284230 A1 <br> CA 2503863 A1 <br> DE 60320572 T2 <br> DK 1556297 T3 <br> EP 1556297 A1 <br> JP 2006504597 A <br> US 2004104100 A1 <br> US 2006283689 A1 <br> WO 2004039706 A1 | 25-05-2004 <br> 13-05-2004 <br> 04-06-2009 <br> 21-07-2008 <br> 27-07-2005 <br> 09-02-2006 <br> 03-06-2004 <br> 21-12-2006 <br> 13-05-2004 |

EPO FORM P0461

Für nähere Einzelheiten zu diesem Anhang : siehe Amtsblatt des Europäischen Patentamts, Nr.12/82